# EUROPEAN PATENT APPLICATION

(11) **EP 2 682 903 A2**
(43) Date of publication of application: **08.01.2014**
(21) Application number: 13275159.5
(22) Date of filing: 05.07.2013
(51) Int. Cl.: G06K 19/077, G09F 3/10, A61B 5/00, G06Q 10/08, G06K 19/02, D06H 1/00

(54) **Label**

(30) Priority: 05.07.2012 GB 201211993
(71) Applicant: SML Europe Ltd, Corby Northamptonshire NN17 5AE (GB)
(72) Inventor: Smith, Danny, Melton Mowbray, Leicestershire LE13 0QD (GB); Stredl, Gianpaolo, 40699 Erkrath (DE)
(74) Representative: Potter Clarkson LLP

(57) **Abstract**

A composite label (2) comprises a first portion (4) and a second portion (6) removeably attached to the first portion (4). The first portion has a first attachment portion, the second portion comprises an identification device comprising an inlay (8) mounted on a carrier material (10). The carrier material extends beyond the inlay to form a second attachment portion.

## Description

This invention relates to a label, particularly to a label adapted to be attached an item such as an item of apparel. The invention relates particularly to a smart/intelligent label adapted to be attached to an item of apparel.

It is known to use RFID (Radio Frequency Identification) technology in order to create an intelligent label.

An RFID label typically carries information in a microchip that is in the form of an inlay which may be carried on a carrier material. The RFID inlay may contain an antenna and a microchip which stores data. The RFID label communicates via radio frequency and therefore does not require "line of sight" in order to be read. RFID readers may obtain information at key points in a supply chain by activating the label through its antenna.

An electronic product code (EPC) may be stored on an RFID label. This is a unique number that can identify an individual item such as an item of clothing.

RFID labels may therefore be used in relation to stock control, anti-theft, anti-counterfeiting among other things.

RFID labels may also be used to provide a "customer experience". This may be achieved by for example using mirrors containing RFID reader(s). When a customer enters a changing room containing such a mirror, in order to try on a product, the mirror, containing the RFID reader, will be able to identify which product the customer is trying on. For example it will be possible to ascertain the size, colour and type of garment. The retailer may have a system that is able to automatically make suggestions to the customer as to other products that the customer may wish to buy that are compatible with the product that the customer is trying on. It also enables the customer to request for example a different colour or different style of product automatically without having to leave the changing room to obtain the different product.

It is generally necessary to enable a customer purchasing an item containing an RFID label to be able to easily remove that label once they have brought the item. This is so that any concerns relating to privacy that a consumer may have can be dealt with through removal of the RFID label.

It is known to create a composite label comprising an RFID label and a label carrying information such as the price and size of the garment. Such labels are often attached to a garment after the garment has been made and are relatively easily removable from the garment.

A disadvantage of such a composite label is therefore that it is easily removed from the item. This can be a problem since it is then no longer possible to track that particular item for stock control purposes for example. Further, it may make it easier for the item to be stolen.

In order to overcome some of these problems, it is known to attach an RFID label to a care label of a garment. A care label is a label that may be attached to a garment, by for example sewing the label into a seam of the garment, which label comprises information such as how to wash the garment, whether the garment is fire proof, etc. Since care labels are usually sewn into a garment, by attaching an RFID label to a care label, it may be more difficult to remove the RFID label from the garment since it is attached to the care label which in turn is sewn into the garment.

However, due to the privacy issues mentioned above, it is important that any RFID label can be removed by a customer once the customer has bought the product.

It is also important, and a legal requirement in many countries, that information carried on the care label must remain visible and must not be removed from the garment to which it is attached at least until a customer has purchased the garment. This means that if an RFID label is attached to a care label it must be possible for a customer to remove the RFID label without removing important information on the care label.

In some circumstances, it may also be necessary for an RFID label to be secured to a care label in a manner that enables the item to be washed at least once without causing detachment of the RFID label from the care label. This is because garment manufacturers/retailers often wish to wash garments before placing them for sale.

According to a first aspect of the present invention there is provided a composite label comprising a first portion and a second portion removeably attached to the first portion the first label having a first attachment portion, the second portion comprising an identification device comprising an inlay mounted on a carrier material, the carrier material extending beyond the inlay to form a second attachment portion.

The first portion may comprise any convenient part of a product to which the composite label is to be attached. In some embodiments of the invention, the first portion comprises a label providing information about a product such as a garment. The label may comprise a care label.

In other embodiments the first portion could comprise, for example a part of the garment itself.

The inventors have realised that it is not necessary to attach the whole of the identification device to the first portion which may comprise a care label as mentioned above. Instead it is necessary to attach the identification device to the care label typically only at one end thereof. This can be readily achieved by ensuring that the carrier material supporting the inlay extends beyond the inlay at least at one end of the identification device. This in turn means that one end of the identification device will comprise carrier material only and there will be no inlay carried on/in that portion of the carrier material. By attaching the identification device to the care label at the second attachment portion only, there is less risk that the inlay will be damaged through this attachment.

The identification device may be any suitable identification device, and in some embodiments will comprise an RFID device. RFID devices are advantageous in many respects, and for example do not require "line of sight" between an RFID device and an RFID reader in order for a reader to read information contained in the RFID device.

In some embodiments the RFID device comprises a UHF RFID device. UHF RFID has the advantage of longer read range and the ability to read multiple RFID devices simultaneously (compared to other types of RFID).

The identification device may have any convenient shape, but preferably it is substantially rectangular or square. Such an identification device will therefore have a first end and an opposite end. The second attachment portion may be formed at one end of the identification device and thus provides an area in/on which there is no inlay that may be used to attach the identification device to the first label in order to form a composite label according to embodiments of the invention.

Similarly, the first portion which will usually be in the form of a care label may take any convenient form but may be for example rectangular or square. In such embodiments the first attachment portion may be formed. Such a care label may be sewn into a seam of a garment to which it is to be attached at the first attachment portion.

The second attachment portion may be attached to the first attachment portion. Such positioning will generally ensure that the identification device is attached to a part of the first portion that does not contain important information that must remain visible at all times.

When a customer has bought the product to which the composite label is attached, the customer may if he or she wishes remove the identfication device by cutting the identification device at or near to the second attachment portion to thereby remove the identification device from the first label.

The identification device may comprise a line of weakness comprising perforations for example defines the second attachment portion. In such an embodiment, a customer who desires to remove the identification device from the first portion may simply tear the identification device along the line of weakness to remove the identification device from the first label.

The identification device may be removeably attached to the first portion.

In some embodiments of the invention the identification device may be adhesively attached to the first portion of the composite label. The adhesive used may be such that it is possible to peel away the identification device from the first portion when desired.

The identification device may be adhesively attached to the first portion before the second attachment portion is attached to the first attachment portion. This serves to maintain the identification device in position before the second attachment portion is attached to the first attachment portion.

A method of fabricating a composite label comprising the steps of:
creating a first portion having a first attachment portion;
creating a second portion comprising an identification device comprising an inlay and a carrier material, such that the carrier material extends beyond the inlay at least at one end of the identification device to form a second attachment portion;
aligning the first and second attachment portions such that one of the attachment portions overlies the other attachment portion;
attaching the composite label to a product such that the first and second attachment portions are attached to one another.

The step of attaching the composite label to a product may comprise the step of sewing the composite label into a seam of a garment such that the first and second portions are sewn into the seam.

In such embodiments of the invention, the composite label is formed during the process of making the garment. This is advantageous since it is not necessary for the composite label to be added to a finished garment which would be more costly and time consuming.

However in some embodiments of the invention, the composite label may be created separately to the process of making the garment. In such embodiments, the first and second attachment portions may be attached to one another by any convenient means.

In some embodiments of the invention the method comprises a step of removeably attaching the identification device to the first portion of the composite label before the first and second attachment portions are sewn into the seam of a garment.

The step of removeably attaching the identification device to the first portion may comprise the step of applying adhesive to a face of the identification device.

In embodiments of the invention the method may comprise the step of printing information onto the first portion of the composite label. This step may take place either before or after the identification device is removeably attached to the first portion.

In embodiments of the invention, the method may comprise a step of creating a line of weakness in the identification device to define the second attachment portion. In such embodiments of the invention, if a customer wishes to remove the identification device from a garment after purchasing the garment, he or she may simply tear the identification device along the line of the weakness to remove the RFID device from the garment.

Embodiments of the invention will now be described by way of example only with reference to the accompanying drawings in which:
Figure 1 is a schematic perspective view of a composite label according to an embodiment of the invention shown attached to a portion of a garment;
Figure 2 is a schematic representation of the first label comprising a care label forming the composite label of Figure 1 adapted to be attached to a garment;
Figure 3 is a schematic representation of an RFID device shown attached to the care label of Figure 2 to form the composite label of Figure 1; and
Figure 4 is a schematic representation of the RFID device shown in Figure 3 showing the second containment portion in more detail.

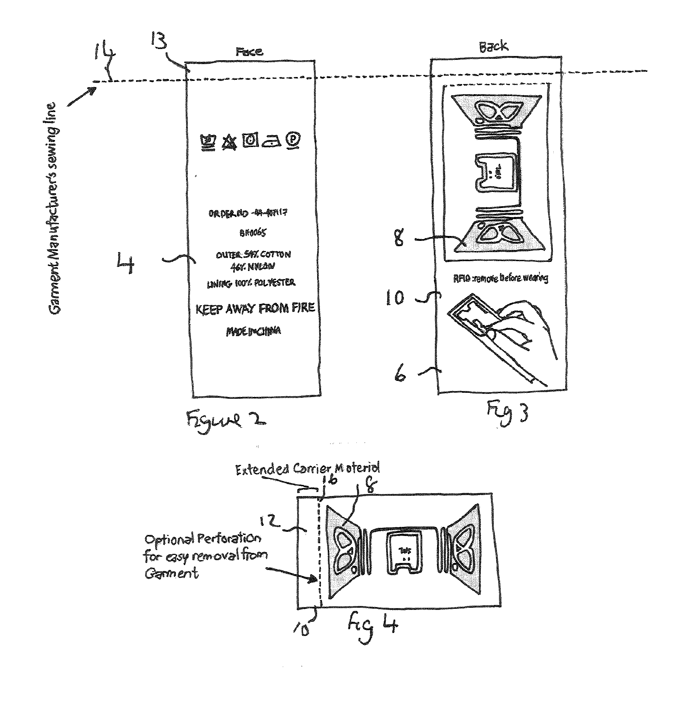

A composite label according to an embodiment of the invention is designated generally by the reference numeral 2. The composite label comprises a first portion which in this embodiment comprises a care label 4. The care label 4 is shown in more detail in Figure 2. Typically a care label will carry information informing a customer as to how the garment to which the label is attached must be washed. It may also contain information regarding the material used to form the garment, and will also indicate whether the material is fire proof.

The information carried by the care label will generally fill part of the available surface area of the care label only. This means that a portion of the care label, and in this embodiment a portion 13 positioned towards one end of the label will have no information printed thereon. This portion comprises a first attachment portion and is the portion of the care label that will be attached to the garment.

According to legislation in many countries, a retailer of garments must ensure that this information remains visible at all times.

The composite label 2 further comprises a second portion 6 comprising an RFID device. The RFID device is shown in more detail in Figure 3. The RFID device comprises an inlay 8 mounted in/on a carrier material 10.

The inlay 8 is programmable and may contain unique information relating to the product to which it is to be attached. Such information may include an electronic product code (EPC). This unique information will enable a person reading the RFID device using an RFID reader to ascertain information about the product such as its colour or size.

The carrier material 10 can be used from an convenient material and may for example be made from any suitable material.

The carrier material 10 extends beyond the inlay at one end of the RFID device to define a second attachment portion 12 on/in which no inlay is mounted. This attachment portion may be used to attach the RFID device 6 to the care label 4.

One way in which the RFID device may be attached to the care label is by positioning the RFID device 6 so that the second attachment portion 12 is aligned with the first attachment portion of the care label 4, which is to be sewn into the garment to which it is to be attached. Because the second attachment portion 12 extends beyond the inlay 8, the inlay 8 will not be damaged by sewing across the second attachment portion.

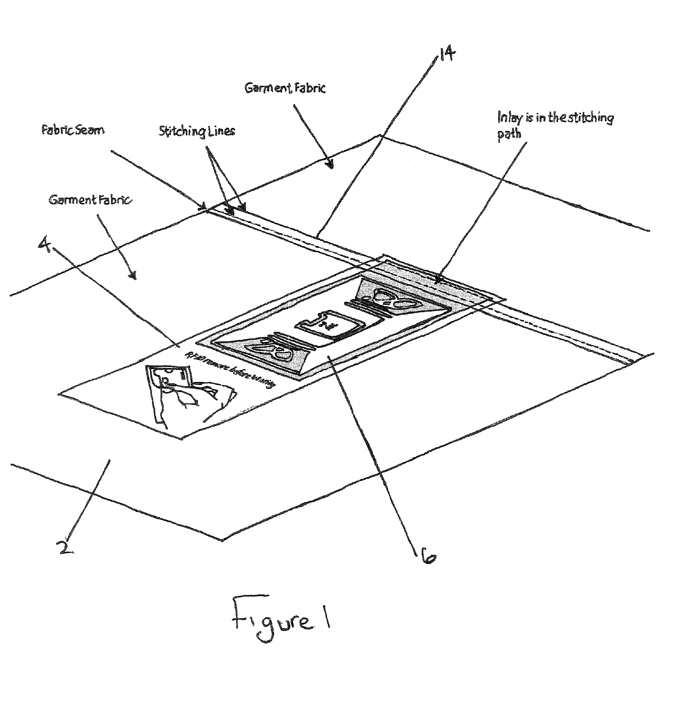

Figures 1, 2 and 3 show the sew line 14 along which a seam of the garment will be formed.

By sewing across the sew line such that the first label 4 and the RFID device 6 are sewn into a seam of the garment, the RFID device 6 is attached to the first label 4 to form a composite label 2, and both the RFID device 6 and the first label 4 are attached to the garment.

In order to simplify the process of aligning the RFID device 6 with the first label 4 prior to sewing the composite label 2 into a seam of the garment, the RFID device 6 may be removeably adhesively attached to the first label 4. This will assist in keeping the inlay fixed to the care label during the sewing process.

The adhesive used may be any convenient adhesive and should be strong enough to allow the inlay to remain fixed to the care label while the care label is printed with the required information and encoded. The label could be encoded/printed during production or after production (e.g. using an RFID printer). On the other hand the adhesive should be weak enough to enable the RFID device 6 to be readily peeled away or washed away from the care label 4 on contact with water.

In the embodiment illustrated in Figures 1 to 4, the RFID device 6 further comprises a line of weakness 16 comprising a plurality of perforations. When a customer wishes to remove the RFID device from the care label the customer merely has to tear the RFID device along the line of weakness in order to remove the portion of the RFID device containing the inlay from the first label 4 and thus from the garment 20. In other embodiments of the invention however there may be no such line of weakness and in such embodiments a customer will merely have to cut the RFID device away from the first label 4 generally at or near to the attachment portion 12.

Since the adhesive is weak enough to allow the RFID device 6 to be peeled away from the care label 4, the RFID device 6 may be readily removed from the garment without also having to remove the first label.

Although the invention has been described with reference to an RFID device, it is to be understood that any type of identification device could be used to form a composite label according to embodiments of the invention.

In addition, although the invention has been described with reference to a composite label that is attachable to a garment, it is to be understood that a composite label according to aspects of the invention could also be attachable to other types of items.

## Claims

1. A composite label comprising a first portion and a second portion removeably attached to the first portion the first portion having a first attachment portion, the second portion comprising an identification device comprising an inlay mounted on a carrier material, the carrier material extending beyond the inlay to form a second attachment portion.

2. A composite label according to Claim 1 wherein the first portion comprises a first label.

3. A composite label according to Claim 1 or Claim 2 wherein the identification device comprises an RFID device.

4. A composite label according to any one of the preceding claims wherein the second portion is substantially rectangular or square and comprises a first end and an opposite end, the second attachment portion being formed at one end of the second portion.

5. A composite label according to any one of the preceding claims wherein the first portion is substantially rectangular or square and comprises a first end an opposite end, the first attachment portion being formed at one end thereof.

6. A composite label according to any one the preceding claims wherein the second attachment portion is attached to the first attachment portion.

7. A composite label according to any one of the preceding claims wherein the identification device comprises a line of weakness defining the second attachment portion.

8. A composite label according to any one of the preceding claims wherein the second portion is removeably attachable to the first portion.

9. A method of fabricating a composite label comprising the steps of:
creating a first portion having a first attachment portion;
creating a second portion comprising an identification device comprising an inlay and a carrier material, such that the carrier material extends beyond the inlay at least at one end of the identification device to form a second attachment portion;
aligning the first and second attachment portions such that one of the attachment portions overlies the other attachment portion;
attaching the composite label to a product such that the first and second attachment portions are attached to one another.

10. A method according to Claim 9 wherein the step of attaching the composite label to a product comprises the step of sewing the composite label into the seam of a garment such that the first and second attachment portions are attached to one another.

11. A method according to Claim 9 or Claim 10 comprising a step of removeably attaching the identification device to the first portion of the composite label before the first and second attachment portions are sewn into the seam of a garment.

12. A method according to Claim 11 wherein the step of removeably attaching the identification device to the first portion comprises the step of applying adhesive to a face of the identification device.

13. A method according to any one of Claims 9 to 12 comprising the step of printing information onto the first portion of the composite label.

14. A method according to any one of Claims 9 to 13 comprising the step of creating a line of weakness in the identification device to define the second attachment portion.
